# EUROPEAN PATENT SPECIFICATION

(11) **EP 3 068 158 B1**
(45) Date of publication and mention of the grant of the patent: **04.09.2019**
(21) Application number: 15305355.8
(22) Date of filing: 10.03.2015
(51) Int. Cl.: H04W 24/02, H04W 84/04

(54) **NETWORK NODE AND METHOD FOR CELL IDENTIFIERS DETERMINATION**
NETZWERKKNOTEN UND VERFAHREN ZUR BESTIMMUNG VON ZELLIDENTIFIZIERERN
NOEUD DE RÉSEAU ET PROCÉDÉ POUR LA DÉTERMINATION D'IDENTIFICATEURS DE CELLULE

(43) Date of publication of application: 14.09.2016
(73) Proprietor: Alcatel Lucent, 91620 Nozay (FR)
(72) Inventor: Wielgoszewska, Anna, Dublin, 15 (IE); Ho, Lester, Dublin, 15 (IE); Lopez-Perez, David, Dublin, 15 (IE); Claussen, Holger, Dublin, 15 (IE); Gacanin, Haris, 2018 Antwerp (BE)
(74) Representative: Leppard, Andrew John

(56) References cited:
- EP-A1- 2 785 100
- US-A1- 2011 086 652
- US-A1- 2013 215 870

## Description

### FIELD OF THE INVENTION

The present invention relates to a network node method, a network node and a computer program product.

### BACKGROUND

Wireless telecommunications networks are known. In a cellular system, radio coverage is provided by areas known as cells. Abase station is located in each cell to provide the radio coverage. Traditional base stations provide coverage in relatively large geographical areas and the cells are often referred to as macro cells. It is possible to provide smaller-sized cells within the macro cell. Such smaller-sized cells are sometimes referred to as micro cells, femto cells and pico cells. A wireless telecommunications network comprised of different sized cells is known as a heterogeneous wireless telecommunications network. One way to establish such a small cell is to provide a small cell base station, such as a home cell or femto base station that provides coverage, having a relatively limited range, typically within the coverage area of a larger cell. The transmission power of a small cell base station is relatively low and, hence, each small cell provides a small coverage area compared with that of a macro cell and covers, for example, an office or a home.

Some small cell base stations are intended to provide support for users belonging to a particular home or office. Accordingly, small cell base stations may be private access or may be public access. In a small cell base station that provides private access, access is registered only to registered users, for example family members or particular groups of employees. In small base stations which are public access, other users may use the small cell base station, typically subject to certain restrictions to protect the quality of service received by preferred users. Other small cell base stations are provided by network operators and are intended to provide additional capacity to the network at areas of high user demand and/or where providing coverage using a macro base station is difficult.

Small cells are typically provided where the communications coverage provided by the overlying macro cell is poor or where a user wishes to use an alternative communications link provided locally, by the small cell base station, to communicate with the core network. Such a situation might arise where, for example, a user has a pre-existing communications link and the user wishes to use that link in preference to that provided by the macro cell network provider to communicate with the core network. These small cells, therefore, provide superior cellular coverage in residential, enterprise or hot-spot outdoor environments. In a typical small cell base station, a broadband Internet protocol connection is used as "back haul" for connecting to the core network.

US 2013/0215870 A1 discloses a method of assigning an identifier to a cell. A SON functional unit receives neighbour information of each cell and stores this in memory. An identifier assignment unit determines a PCI to be assigned to a cell by creating a first PCI candidate list which lists all the PCIs that can be assigned, and then excluding PCIs of adjacent cells and selecting from the remaining list. EP 2 785 100 A1 discloses a method for selecting a physical layer identifier for use in a base station. In a first stage, the base station investigates its own RF environment in order to make an initial, temporary identifier selection. In a second stage, the base station requests connected UEs to report measurements of neighbouring base stations that they are able to detect. The base station then proceeds to select a final identifier, excluding from contention all identifiers detected through received UE measurement reports as well as those detected in the first stage. The selected final identifier is also different from the temporary identifier used in the first stage.

Although providing heterogeneous networks can provide performance improvements, such networks can also cause unexpected consequences. Accordingly, it is desired to provide an improved technique for use in such networks.

### SUMMARY

According to a first aspect, there is provided a network node method as claimed in claim 1.

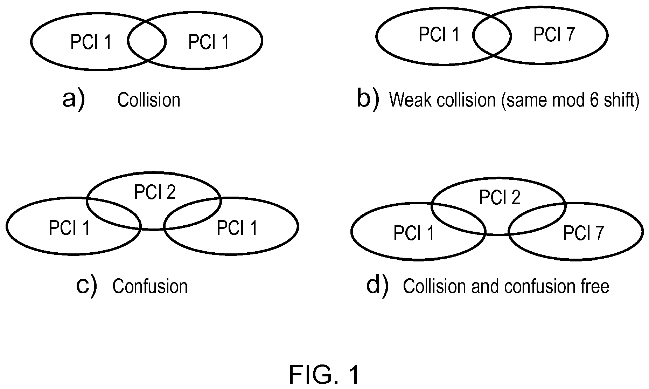

The first aspect recognizes that self-configuration and self-optimization are desired features of a network, as they facilitate autonomous setup of network parameters, ease network maintenance and consequently lower operational expenditure. One of the parameters crucial for proper network operation is the cell identifier (ID) (such as the physical cell identity), which is used to identify a cell. The cell identifier is further used to help cells fetch information about their neighbouring cells in the form of in the neighbour cell list (NCL) and determines the transmission patterns of reference and synchronization signals which play a key role in network access and mobility procedures, among others. Problems arise as operators deploy equipment from multiple vendors, and individual vendors implement their own schemes to assign the cell identifiers. The assignment of the cell identifiers is challenging as the number of available identifiers is usually limited (for example, 512 different identifiers in Universal Mobile Telecommunication System (UMTS) networks and 504 individual identifiers in Long Term Evolution (LTE) networks) and because the pool of cell identifiers reserved for small cells is typically further limited and defined by the individual operators. As a result, cell identifiers need to be reused efficiently. To ensure proper network operation, every cell needs to be clearly identified within an area and, should a cell identifier need to be unavoidably reused, conflicts can occur due to collisions and confusions between transmissions of different cells sharing the same identifier. For example, in LTE, collisions can occur when the same cell identifier is used by neighbouring cells, a weak collision can occur when different cell identifiers are used but with the same reference signal shift (such as using the same cell identifier MOD 6), and confusion can occur where the same identifier is used by cells having a common neighbour, as illustrated in Figure 1.

As mentioned above, in multi-vendor deployments, the cell identifiers are currently typically assigned using a number of algorithms implemented by numerous vendors in their equipment. These algorithms do not have an overview of the entire network structure. This often results in an increased number of collisions and confusion and/or more identifiers being used. Since cell identifiers are a scarce resource, an efficient reuse of them is required.

Accordingly, a method is provided. The method may be for a network node of a wireless telecommunications network. The method may be for determining cell identifiers to be used by small cell base stations within the wireless telecommunications network. The method may comprise the step of determining a cell identifier to be allocated to each of a plurality of small cell base stations. The cell identifier to be allocated may be determined based on neighbour information which is obtained by each of the plurality of small cell base stations. The cell identifier may be allocated to minimise reuse of cell identifiers between each small cell base station. The neighbour information may be received from the small cell base stations. In this way, a centralized approach is provided where a network node determines the cell identifiers using neighbour information received from the small cell base stations themselves. This helps to ensure that cell identifiers are allocated based on a more complete understanding of the small cell base stations within the wireless telecommunications network and avoids individual vendors allocating cell identifiers themselves. The cell identifiers may be allocated in order to minimize reuse of the cell identifiers by the small cell base stations. It will be appreciated that a variety of different algorithms may be used to achieve this. This helps to ensure that cell identifiers are not reused if at all possible and, if they are, they are only reused to the minimum extent required in order to minimise the potential for confusion and/or collisions.

In one embodiment, the determining a cell identifier to be allocated to each of a plurality of small cell base stations occurs at least one of periodically, in response to a reduction of wireless telecommunications network activity and in response to a reduction of wireless telecommunications network performance. Accordingly, the cell identifiers may be allocated periodically or in response to a trigger event such as a reduction in network activity or network performance. Hence, the cell identifiers may be determined on a regular basis and/or in response to a change in the operation of the network. This helps to ensure that the frequency of any consequential changes in cell identifiers is minimized in order to provide stability to the network.

In one embodiment, the neighbour information comprises an indication of cell identifiers used by neighbouring small cell base stations which are measureable by each of the plurality of small cell base stations. Accordingly, the neighbour information received by the network node may indicate the cell identifiers of those neighbouring cells which each small cell base station is able to measure itself. This information may be collected periodically by the small cell base stations or in response to instructions to do so transmitted by the network node. The information received by the network node may then be collated in order to identify the neighbour relationships between the small cell base stations and identify neighbouring cell identifiers. It will be appreciated that the plurality of small cell base stations may comprise a sub-set of all of the small cell base stations within the wireless telecommunications network.

In one embodiment, the neighbour information indicates that two small cell base stations are neighbours if either small cell base station is measureable by the other. Hence, if a first small cell base station is able to detect the presence of a second small cell base station, then the two are neighbours, even if the second small cell base station is not able to detect the presence of the first small cell base station.

In one embodiment, the neighbour information comprises an indication of cell identifiers used by neighbouring small cell base stations which are measureable by each of the plurality of small cell base stations when transmitting with a maximum pilot transmission power. Accordingly, the neighbour information includes the cell identifiers of neighbouring small cell base stations when those small cell base stations are transmitting with maximum power. Again, the small cell base stations may be configured to transmit with full power periodically and measure the transmissions from neighbouring base stations also transmitting with full power periodically and/or may do so in response to instructions from the network node to do so. Gathering neighbour information under these conditions helps to ensure that the worst-case assessment of potential neighbours is considered. However, gathering neighbour information under these conditions may also cause disruption to the network due to increased interference, collisions, confusion and reduced power to support user communication.

In one embodiment, the neighbour information is measured when the neighbouring small cell base stations transmit with an above-normal operating pilot power.

In one embodiment, the neighbour information comprises an indication of cell identifiers used by neighbouring small cell base stations measureable by each of the plurality of small cell base stations whose pilot signals have greater than a threshold transmission power. Accordingly, those signals received from base stations which have less than a threshold amount of transmission power are not considered to be neighbours. Once again, the small cell base stations may be configured to exclude from their neighbour information those transmissions having less than the threshold amount of transmission power and/ or may be instructed by the network node to do so.

In one embodiment, the neighbour information comprises an indication of a strength of measureable pilot signals. Accordingly, the neighbour information may also include an indication of the strength of the pilot signals measured by the small cell base stations.

In one embodiment, when cell identifiers are to be reused, those cell identifiers used by small cell base stations whose measured pilot signals have a lower signal strength are selected in preference to those cell identifiers used by small cell base stations whose measured pilot signals have a higher signal strength. Accordingly, when a cell identifier is to be reused, the cell identifier corresponding with the lowest signal strength may be reused in order to minimize the extent of any collision or confusion that may occur as a result of such reuse.

In one embodiment, when the determining a cell identifier which minimises reuse of cell identifiers between each of the plurality of the small cell base stations causes a change in a cell identifier allocated previously to a small cell base station, the method comprises transmitting an indication of the change in the cell identifier allocated previously to the small cell base station. Accordingly, should a cell identifier be changed, then that change may be notified to the small cell base station. This helps to ensure that only changes are propagated, which minimizes any transmission overhead.

In one embodiment, the method comprises transmitting the cell identifiers to the small cell base stations. It will be appreciated that only changes to allocated cell identifiers need be transmitted.

In one embodiment, the method comprises updating neighbour cell lists of each neighbouring small cell base station to include the change in the cell identifier. Hence, should a cell identifier be changed, then neighbour lists of neighbouring small cell base stations may also be updated to indicate that change.

The method comprises determining an initial cell identifier to be allocated to a small cell base station based on initial neighbour information obtained by the small cell base station. Hence, an initial cell identifier may be allocated to a small cell base station based just on initial neighbour information obtained by that small cell base station. This allocation of an initial cell identifier to a small cell base station may occur based just on the initial neighbour information obtained by just that small cell base station relating to its immediate neighbours. This provides for an initial allocation of the cell identifier based on the immediate neighbours of that small cell base station. This will typically be sufficient to enable the small cell base station to operate adequately without needing a wider evaluation to be performed which may require changes to other base stations and disrupt service to user equipment. Such a wider evaluation can then be performed at a convenient time to optimise the network, as mentioned above.

In one embodiment, the determining an initial cell identifier occurs in response to at least one of addition of the small cell base station to the wireless telecommunications network and a change in communications performance experienced by the small cell base station. Accordingly, the initial cell identifier may be determined when the small cell base station is added to the network or in response to a trigger event such as a reduction in the performance being experienced by the small cell base station or its user equipment.

In one embodiment, the initial neighbour information comprises an indication of cell identifiers used by neighbouring small cell base stations which are measureable by the small cell base station. Accordingly, the initial neighbour information provided by the small cell may indicate the cell identifiers which are measurable by the small cell base station.

In one embodiment, the initial neighbour information comprises an indication of cell identifiers used by neighbouring small cell base stations having greater than a threshold pilot transmission power measureable by the small cell base station. Accordingly, those signals received from base stations which have less than a threshold amount of transmission power are not considered to be neighbours. Once again, the small cell base station may be configured to exclude from its initial neighbour information those transmissions having less than the threshold amount of transmission power and/or may be instructed by the network node to do so.

In one embodiment, the initial neighbour information comprises an indication of a strength of measureable pilot signals. Accordingly, the initial neighbour information may also include an indication of the strength of the pilot signals measured by the small cell base station.

In one embodiment, the initial neighbour information indicates that two small cell base stations are neighbours if either small cell base station is measureable by the other. Hence, if a first small cell base station is able to detect the presence of a second small cell base station, then the two are neighbours, even if the second small cell base station is not able to detect the presence of the first small cell base station.

In one embodiment, the determining an initial cell identifier comprises allocating an initial cell identifier which minimises reuse of cell identifiers between the small cell base station and the neighbouring small cell base stations. Accordingly, the initial cell identifier may be allocated in order to minimize reuse of the cell identifiers by the small cell base stations. It will be appreciated that a variety of different algorithms may be used to achieve this. This helps to ensure that cell identifiers are not reused if at all possible and, if they are, they are only reused to the minimum extent required in order to minimise the potential for confusion and/or collisions.

In one embodiment, when cell identifiers are to be reused, those cell identifiers used by small cell base stations whose measured pilot signals have a lower signal strength are selected in preference to those cell identifiers used by small cell base stations whose measured pilot signals have a higher signal strength. Accordingly, when a cell identifier is to be reused, the cell identifier corresponding with the lowest signal strength may be reused in order to minimize the extent of any collision or confusion that may occur as a result of such reuse.

In one embodiment, the method comprises transmitting the initial cell identifier to the small cell base station.

In one embodiment, the method comprises updating neighbour cell lists of the neighbouring small cell base stations to include the initial cell identifier. Hence, should a cell identifier be changed, then neighbour lists of neighbouring small cell base stations may also be updated to indicate that change.

In one embodiment, when the determining an initial cell identifier which minimises reuse of cell identifiers between the small cell base station and the neighbouring small cell base stations causes a change in a cell identifier allocated previously to a neighbouring small cell base station, the method comprises transmitting an indication of the change in the cell identifier allocated previously to the neighbouring small cell base station.

In one embodiment, the method comprises updating neighbour cell lists of the neighbouring small cell base stations to include the change in the cell identifier. Hence, should a cell identifier be changed, then neighbour lists of neighbouring small cell base stations may also be updated to indicate that change.

The neighbour information comprises an indication of cell identifiers used by neighbouring small cell base stations which are measureable by each of the plurality of small cell base stations when transmitting with an increased transmission power compared to that used when determining the initial cell identifier. Accordingly, the neighbour information may be obtained by the small cell base stations when the small cell base stations are transmitting with a higher transmission power (which may be less than its maximum or full transmission power) than that used when determining the initial cell identifier. This means that the initial cell identifier may be obtained while the network is transmitting with its normal operational parameters, whereas the neighbour information may only be obtained when the small cell base stations are transmitting with the increased power. This increase in transmission power may be instructed by the network node. Increasing the transmission power increases the interference between small cell base stations and highlights neighbours which may not be detectable during normal operation. This helps to ensure that the cell identifiers allocated based on the neighbour information assume worst-case conditions.

In one embodiment, the increased transmission power is decreased following the determining the neighbour information. Accordingly, once the neighbour information is obtained, then the increase in transmission power may be reversed. This decrease may be instructed by the network node or may occur automatically following the reporting of the neighbour information.

In one embodiment, the initial neighbour information is measured when the neighbouring small cell base stations transmit with a normal operating pilot power.

According to a second aspect, there is provided a network node as claimed in claim 12.

In one embodiment, the determining logic is operable to determine a cell identifier to be allocated to each of a plurality of small cell base stations at least one of periodically, in response to a reduction of wireless telecommunications network activity and in response to a reduction of wireless telecommunications network performance.

In one embodiment, the neighbour information comprises an indication of cell identifiers used by neighbouring small cell base stations which are measureable by each of the plurality of small cell base stations.

In one embodiment, the neighbour information indicates that two small cell base stations are neighbours if either small cell base station is measureable by the other.

In one embodiment, the neighbour information comprises an indication of cell identifiers used by neighbouring small cell base stations which are measureable by each of the plurality of small cell base stations when transmitting with a maximum pilot transmission power.

In one embodiment, the neighbour information is measured when the neighbouring small cell base stations transmit with an above-normal operating pilot power.

In one embodiment, the neighbour information comprises an indication of cell identifiers used by neighbouring small cell base stations measureable by each of the plurality of small cell base stations whose pilot signals have greater than a threshold transmission power.

In one embodiment, the neighbour information comprises an indication of a strength of measureable pilot signals.

In one embodiment, the determining logic is operable, when cell identifiers are to be reused, to select those cell identifiers used by small cell base stations whose measured pilot signals have a lower signal strength in preference to those cell identifiers used by small cell base stations whose measured pilot signals have a higher signal strength.

In one embodiment, when the determining logic causes a change in a cell identifier allocated previously to a small cell base station, the determining logic is operable to transmit an indication of the change in the cell identifier allocated previously to the small cell base station.

In one embodiment, the determining logic is operable to update neighbour cell lists of each neighbouring small cell base station to include the change in the cell identifier.

The determining logic is operable to an initial cell identifier to be allocated to a small cell base station based on initial neighbour information obtained by the small cell base station.

In one embodiment, the determining logic is operable to determine an initial cell identifier occurs in response to at least one of addition of the small cell base station to the wireless telecommunications network and a change in communications performance experienced by the small cell base station.

In one embodiment, the initial neighbour information comprises an indication of cell identifiers used by neighbouring small cell base stations which are measureable by the small cell base station.

In one embodiment, the initial neighbour information comprises an indication of cell identifiers used by neighbouring small cell base stations having greater than a threshold pilot transmission power measureable by the small cell base station.

In one embodiment, the initial neighbour information comprises an indication of a strength of measureable pilot signals.

In one embodiment, the initial neighbour information indicates that two small cell base stations are neighbours if either small cell base station is measureable by the other.

In one embodiment, the determining logic is operable to allocate an initial cell identifier which minimises reuse of cell identifiers between the small cell base station and the neighbouring small cell base stations.

In one embodiment, the determining logic is operable, when cell identifiers are to be reused, to select those cell identifiers used by small cell base stations whose measured pilot signals have a lower signal strength in preference to those cell identifiers used by small cell base stations whose measured pilot signals have a higher signal strength.

In one embodiment, the determining logic is operable to transmit the initial cell identifier to the small cell base station.

In one embodiment, the determining logic is operable to update neighbour cell lists of the neighbouring small cell base stations to include the initial cell identifier.

In one embodiment, the determining logic is operable, when the initial cell identifier causes a change in a cell identifier allocated previously to a neighbouring small cell base station, to transmit an indication of the change in the cell identifier allocated previously to the neighbouring small cell base station.

In one embodiment, the determining logic is operable to update neighbour cell lists of the neighbouring small cell base stations to include the change in the cell identifier.

The neighbour information comprises an indication of cell identifiers used by neighbouring small cell base stations which are measureable by each of the plurality of small cell base stations when transmitting with an increased transmission power compared to that used when determining the initial cell identifier.

In one embodiment, the increased transmission power is decreased following the determining the neighbour information.

In one embodiment, the initial neighbour information is measured when the neighbouring small cell base stations transmit with a normal operating pilot power.

According to a third aspect, there is provided a computer program product operable, when executed on a computer, to perform the method of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates collisions and confusion caused in a network due to cell identifier reuse;
Figure 2 illustrates a cell identifier allocation procedure according to one embodiment;
Figures 3 and 4 illustrate cell identifier assignment according to embodiments;
Figures 5 and 6 illustrate a coupling matrix;
Figures 7, 8 and 9 illustrate local optimisation according to embodiments;
Figure 10 illustrates global optimisation according to one embodiment;
Figure 11 illustrates a neighbour cell list update according to one embodiment; and
Figure 12 illustrates network interactions according to one embodiment.

### DESCRIPTION OF THE EMBODIMENTS

Before discussing embodiments in any more detail, first an overview will be provided. Embodiments provide a centralized technique whereby individual base stations make measurements to detect or sense the presence of their neighbours and report those measurements to a managing network node. The network node then determines the relationship between the neighbours based on that sensed information and allocates cell identifiers in order to avoid the risk of collisions and/or confusion caused by reuse of cell identifiers by neighbouring cells.

The network node may collect the measurements to perform cell identifier allocation globally, across a group of base stations and/or locally, among a single base station and its immediate neighbours.

In the local allocation, the measurements are made by a single base station, typically when it is added to the network or when a trigger event occurs, such as a drop in performance. The base station detects the presence of its immediate neighbours by measuring their transmissions and typically makes those measurements when the base stations are transmitting with their standard transmission power. The network node receives that information and can then perform a cell identifier allocation which is optimized for that cluster of immediately neighbouring base stations. Although this can lead to sub-optimal allocation on a more global level, this would typically be sufficient to enable the network to operate adequately until that more global optimization can occur.

Periodically, or on the occurrence of a trigger event, a global allocation of cell identifiers may then be made. In order to provide the neighbour information for this global allocation, the base stations are instructed to transmit with maximum power. This causes greater than normal interference within the network, and so represents a worst-case scenario for the cell identifier allocated. This is because transmissions between base stations which would not normally be received under normal operating conditions may occur. Each of the base stations transmitting with their maximum transmission power will sense or detect transmissions made by other base stations also transmitting with maximum transmission power. This information is provided to the network node which can then perform a cell identifier optimization which minimizes cell identifier reuse between neighbouring base stations. It will be appreciated that causing the base stations to transmit with maximum transmission power can cause collisions and/or confusion which is not normally experienced under normal operating conditions and reduces the resources available to support user equipment communication. Accordingly, operating the base stations in this way is detrimental to the quality of service to the user equipment and so is typically only performed at times of low user traffic (such as during the night) or when the quality of service offered to user equipment has degraded to a level where operating the base stations in this way does little to further impact the user equipment in order to re-optimize the network.

Accordingly, embodiments provide an arrangement whereby coupling matrices are created followed by optimizing cell identifiers using those matrices and updating cell identifiers and neighbour cell lists as appropriate. In particular, embodiments create a coupling matrix based on measurements made by base stations, in combination with power boosting of cells where appropriate. The power configurations, measurements and reporting are typically performed via the standardized TR-196 protocol. This ensures multi-vendor compatibility. It will be appreciated that the coupling matrix may be implemented in a variety of different ways, to show the relationship between neighbouring cells.

Next, there is a multi-stage optimization process. Local optimization occurs during high-traffic hours to minimize disruption but to adapt quickly to changes in the network. This may be followed by global optimization during low traffic hours for optimal allocation of cell identifiers. Should any changes to the cell identifiers be made as a result of this optimisation, then these updates are pushed to the base stations, again using the standardized TR-196 protocol.

It will be appreciated that this approach is generally applicable to any of a variety of different standardized wireless telecommunications networks operating under different standards such as UMTS, LTE, etc. Also, although these embodiments are described with reference to using the TR-196 protocol, it will be appreciated that other approaches for communicating information between the network node and the base stations maybe used.

In the following embodiments, the network node is implemented by the Alcatel-Lucent Motive CX Management platform as the central unit management platform and all the communication of measurement parameters and instructions between the small cell base stations and the management platform is performed using the TR-196 data model. However, it will be appreciated that other network nodes may be utilised in other networks and that other reporting standards may be used.

Embodiments include a number of components including creation of a coupling matrix, cell ID optimisation and cell ID and neighbour cell list updates (both of which are performed typically for both local and global optimisation) as will be mentioned in more detail below.

### Coupling Matrix Creation

Representation of the network capturing the relationship between the cells of multiple vendors plays an important role for the cell ID assignment procedures. The coupling matrix represents the pairing between each and every pair of cells in the network. Reference Signal Received Power (RSRP) measurements are conveniently used for that purpose. It will be appreciated that other metrics to indicate radio distance could be used such as path loss, etc. It is assumed that the pilot power of the small cells can be controlled from the central unit.

At the time of deployment/topology modification, a cell measures RSRP of all the discovered cells and sends the report to the central unit, which constructs the coupling matrix that is further used for cell ID assignment.

The overall global cell ID optimization is done at low traffic hours, usually at night in order to minimise impact on network performance during the measurement and any consequential reconfiguration of cell IDs that occur. At this time, small cells often operate with a limited transmission power to provide the required coverage. Moreover, some of the base stations cells providing service during the day may be put in the idle mode at night for energy-saving purposes. Therefore, to perform the measurements necessary to create a coupling matrix in such scenario, power boosting may be required. The pilot transmission power of the cells are boosted for the measurement period and reduced to the normal state once the measurement is done. How the pilot power boosting can be used in networks of different dynamics is discussed in more detail below.

Consider now two examples:

### Maximal pilot power boosting

In this example, the cell ID allocation is performed based on the coupling matrix generated when all small cells are transmitting at maximum power. This may result in more cells being coupled than in the usual daily setup and represents the most challenging scenario from the cell ID assignment perspective. This assignment is for the worst case scenario, as during normal operation, the small cell powers may be lower and some of the coupled small cells may no longer have an impact on each other, making the assignment over-provisioned.

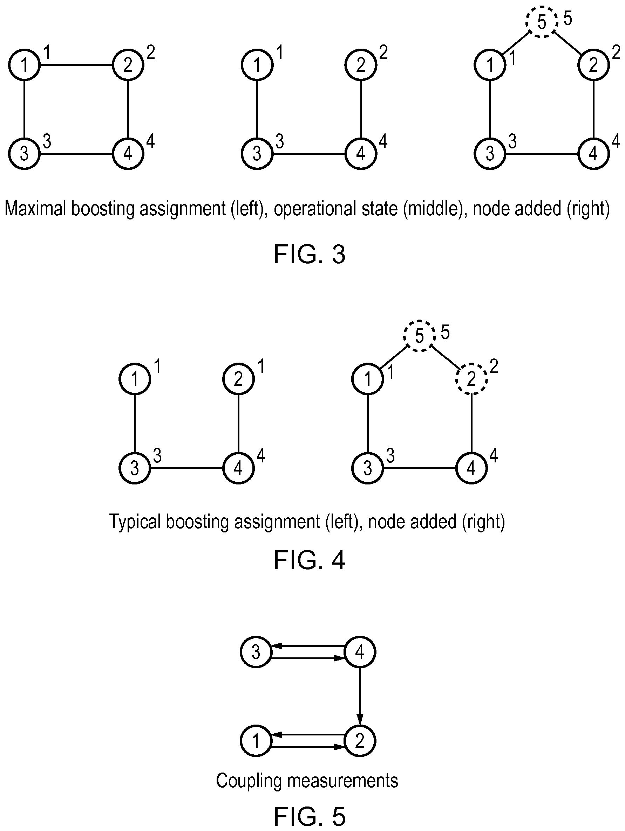

Assuming a small network and that 6 cell IDs available, Figure 3 shows an example global assignment after maximum power boosting on the left, where the cell numbers (for example, global cell identifiers, which are unique) are shown within the circles and the cell IDs (for example, physical cell identities, which are limited and may need to be reused) are indicated adjacent the circles. When the transmission powers are adjusted during the day, the resulting graph may look as illustrated in the middle where cells 1 and 2 are not coupled anymore. In this case, different cell IDs are over-provisioned as ideally they could both reuse cell ID 1 or 2. On the other hand, this makes 'room' for the new cells that may be deployed during the day, lowering the collision/ confusion chance. In this example, if a new node is added (node 5 on the right) and coupled with cell 1 and 2, then thanks to over-provisioning this would be a confusion free assignment.

This approach is therefore more applicable to small cell deployments characterized by frequent and unpredictable changes that affect the coupling matrix such as adjustments to the pilot power due to SON features, e.g., coverage/load balancing and energy saving idle modes, etc. It is also useful at the network deployment stage, where new nodes are frequently added and there is no historical data that would indicate typical network operational state. As shown in the example above, the more conservative allocation provides room to add new cells and therefore assignments are less prone to change during the day, which results in more efficient local optimization.

### Normal operating power

The pilot transmission power of the small cells is adjusted to re-create a typical daily setup. The typical setup may be derived from the historical data, i.e. pilot power measurements gathered during the day over a period of time. The chosen setup needs to well-represent the network and at the same time mitigate the risk of frequent changes after the global assignment. Therefore, the most challenging observed scenario is typically chosen, i.e. when most of the cells are up and transmitting at high power.

Referring to the example in Figure 3, assume now that the pilot powers are characterized by high stability. In that case, while boosting, the powers will be adjusted to re-create the most typical daily set up. After the measurement and coupling matrix creation, the global assignment could be done, as shown in Figure 4 on the left. This approach used only 3 cell IDs, compared to 4 in the previous example shown in Figure 3 (middle). However, when a new node is added during the day, and local optimization is performed, this then requires cell ID updates on 2 nodes (nodes 2 and 5), as opposed to only 1 (node 5) in the previous example.

Hence, this approach is better adjusted to a real deployment but since it is more tailored to a typical operational situation, it requires more updates whenever a change in the network occurs. It is therefore more applicable to small cell networks that have a predictable and more static behaviour.

### Coupling matrix

Whichever approach or combination of approaches are used for setting the pilot transmission power, the values of RSRP measurements can be directly used as the matrix input to represent level of coupling between the cells. Further modification may include introduction of a threshold, below which the cells are considered not to be coupled.

Consider an example of two cells *i* and *j*, where a measurement taken by cell i towards cell *j* is denoted as *pᵢⱼ.* As indicated above, this value can be used in the coupling matrix A directly *aᵢⱼ* = *pᵢⱼ* or a threshold *T* can be introduced in such a way that: *pᵢⱼ* > *T →aᵢⱼ* = *1 or aᵢⱼ* = *pᵢⱼ* depending on the approach. However, due to measurement errors or differences in pilot transmit powers, the results may not be identical for the two considered cells, i.e., *aᵢⱼ* ≠ *aⱼᵢ.* To explicitly define collision, aᵢⱼ is set to *aᵢⱼ* = *aⱼᵢ* = *max(aᵢⱼ* ; *aⱼᵢ*), thus making the coupling matrix symmetric.

The creation of an example coupling matrix will now be described. For simplicity, this example uses a small network of 4 small cells, as shown in Figure 5, where the neighbour visibility is marked.

Each small cell measures the RSRP from its neighbours and the measurements are sent to the network management platform. Table 1 shows the collected values from all the cells (assuming that the small cell receiver sensitivity is -120dBm). Based on the reported measurements, the coupling matrix is derived, as explained above. The matrix is made symmetric by taking the higher of the two values for each couple in order to compensate for "hidden" node issues.

**Table 1: RSRP measurements [dBm]**

| **Cell** | **1** | **2** | **3** | **4** |
|---|---|---|---|---|
| **1** | - | -93.7624 | - | - |
| **2** | -93.6887 | - | - | - |
| **3** | - | - | - | -96.6316 |
| **4** | - | -118.2651 | -98.2766 | - |

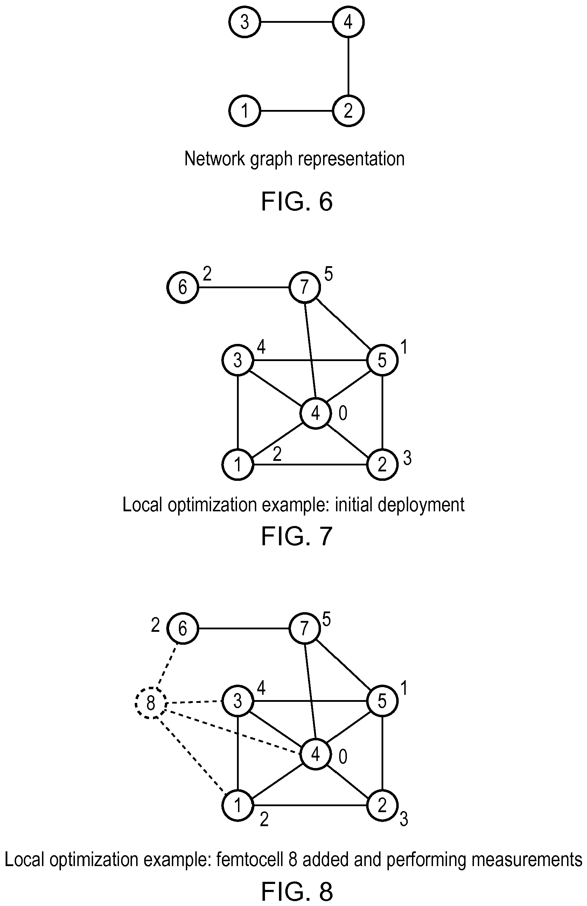

In this example, small cell 4 is able to detect and measure small cell 2 (as indicated by the "-118.2651" entry in column 2 for row 4 associated with measurements made by small cell 4), but small cell 2 does not detect small cell 4 (as indicated by the "-" entry in column 4 for row 2 associated with measurements made by small cell 2), which is indicated with arrows in Figure 5. Such situations may arise due to differences in the small cell transmission powers (i.e. small cell 2 has a higher transmission power than small cell 4), or as illustrated in this example, due to errors in measurements introduced by the hardware. The final coupling matrix is shown in Table 2, and also indicated in Figure 6, where the coupled nodes are connected.

**Table 2: Coupling matrix**

| **Cell** | **1** | **2** | **3** | **4** |
|---|---|---|---|---|
| **1** | - | -93.6887 | - | - |
| **2** | -93.6887 | - | - | -118.2651 |
| **3** | - | - | - | -96.6316 |
| **4** | - | -118.2651 | -96.6316 | - |

Now taking cell 1 as an example, if existing approaches were used, cell 1 would be responsible for choosing its cell ID based only on the limited neighbour information. That cell has only one neighbour, i.e. cell 2, so mitigating collision is easy as soon as a different cell ID is chosen. However, cell 1 is not aware of the confusion risk, if the chosen cell ID is same as for cell 4. The same concerns other cells in the network. It is therefore important to consider the global view and coupling between the small cells for cell ID assignment purposes.

### Cell ID Optimization

Whenever a change in the network topology occurs, i.e. due to a cell addition/removal or configuration parameter change, an update of the assigned cell IDs may be required to minimise cell ID reuse to minimise collisions/confusion. Since during high traffic hours a re-configuration of the whole network could be disruptive, a local optimization is performed where only the affected cells alone or with their direct neighbours are considered. When the traffic is low (e.g. during the night) a global optimization is triggered to achieve an optimal assignment. The relevant information about their coupling can be extracted from the coupling matrix generated in the previous step and the deployment.

Both the local and global optimizations will now be described in more detail below.

### Local optimization

Consider an example where the network consists of 7 nodes, and 6 PCIs (cell identifiers) are allowed to be used. Figure 7 shows the starting configuration, where the cell number is indicated within the circle and the PCI is indicated adjacent the circle, this is a collision and confusion-free assignment. The graph represents the coupling between the cells and the coupling matrix is given in Table 3 below.

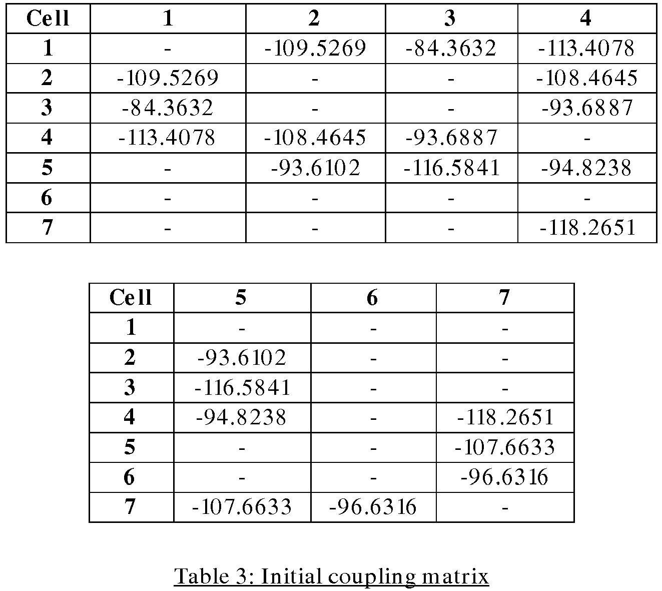

Anew node 8 is added to the network and is marked in Figure 8. Assuming that the addition happened during the day time, when the network is fully operational and serves users, the new cell performs the RSRP measurements of all the detected neighbours and reports them back to the central management unit as illustrated in Table 4.

**Table 4: RSRP measurements reported by cell 8**

| **Cell** | **1** | **2** | **3** | **4** | **5** | **6** | **7** | **8** |
|---|---|---|---|---|---|---|---|---|
| **8** | -95.1284 | - | -105.3245 | -99.0621 | - | -109.5811 | - | - |

The central management unit in turns updates the coupling matrix of the network as shown in Table 5.

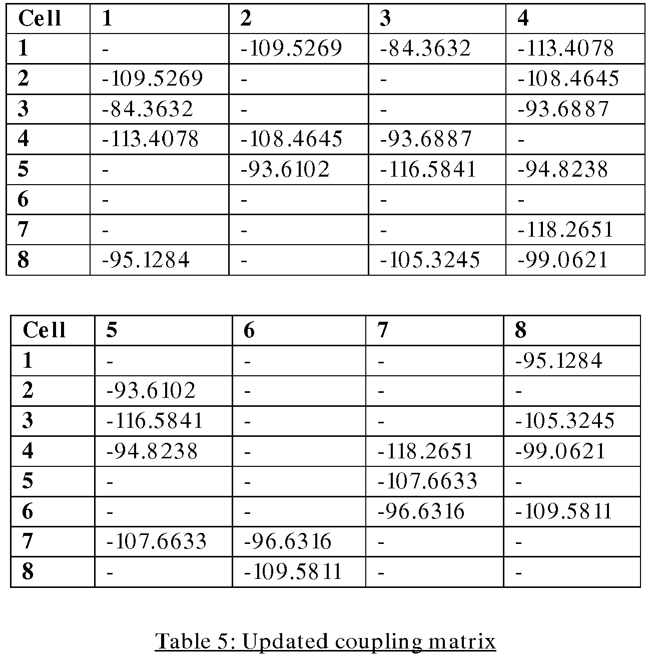

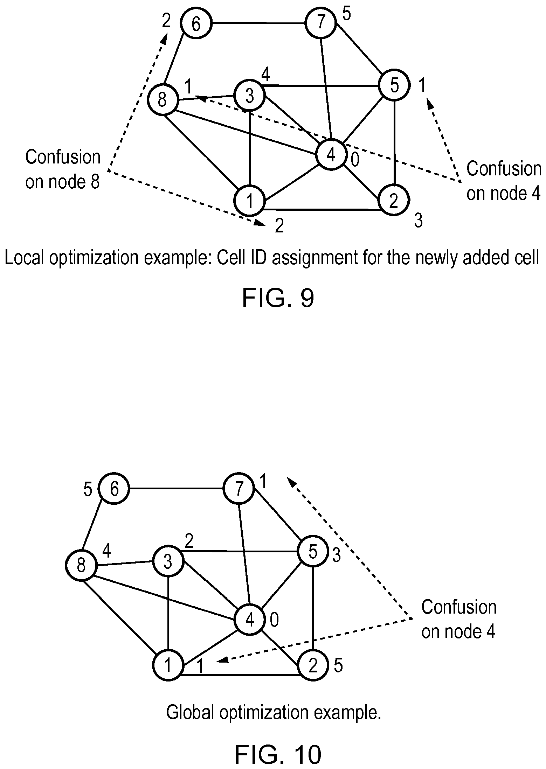

Since the network is fully operational, to minimize the disruption caused by the reconfiguration, the cell ID is assigned only to the newly-added node. In this case, the best local assignment is achieved when assigning PCI 1 to the new node, and not affecting the neighbours, as shown in Figure 9.

This initial assignment, however, causes two confusions. The one with nodes 6 and 1 is unavoidable, as they reuse the same cell ID and the newly added node becomes an intermediate connection. The second confusion is caused at node 3, since nodes 5 and 8 reuse cell ID 1. Finally, the NCL entries are updated on all the cells affected by the change, which in this case are the new node (node 8) and its direct neighbours (nodes 1, 3, 4 and 6).

### Global Optimization

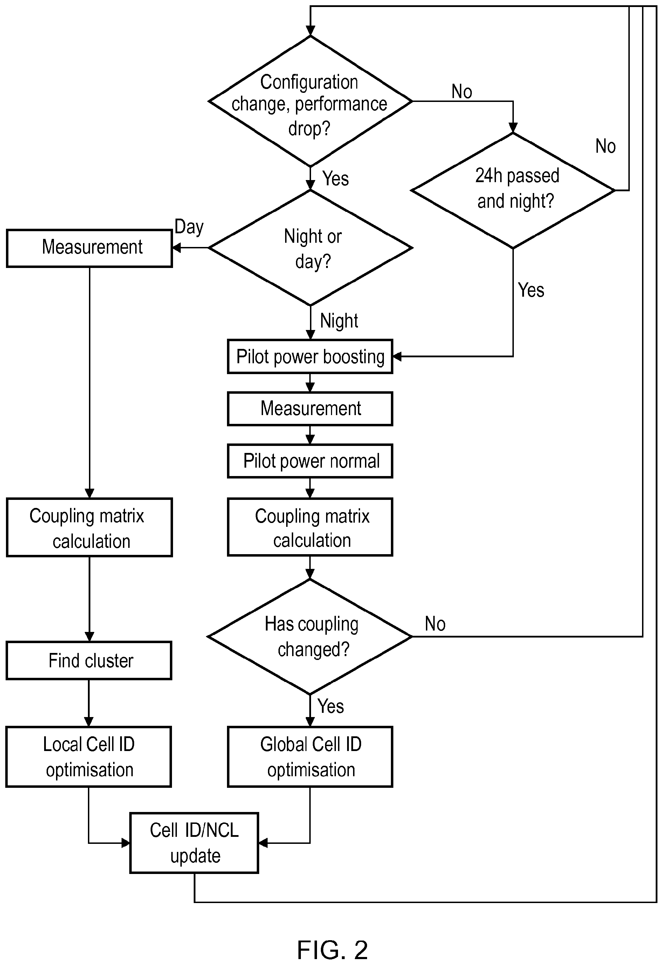

Considering the above and the procedure from Figure 2, now assume that the periodic maintenance trigger has been activated in the low-traffic hours. In that case, it is possible to perform the measurement using power-boosted pilot signals, which would give each cell a clearer view on their neighbours and potentially-colliding cells. After the measurement, the pilot power is then set back to normal and the measurements are fed back to the central management unit, which recalculates the coupling matrix to minimise cell ID reuse and confusion. If updates are available, the global cell ID assignment is invoked. If no coupling changes are observed since the last maintenance check, then the network retains its configuration. The same approach would be taken, if at the beginning of this example, the new node was added in the low-traffic hours.

In this example, node 8 was added during the day and the coupling matrix is based on the measurements taken by the new node (node 8) towards its neighbours. Full measurements are taken at night with boosted power and the updated coupling matrix is shown in Table 6.

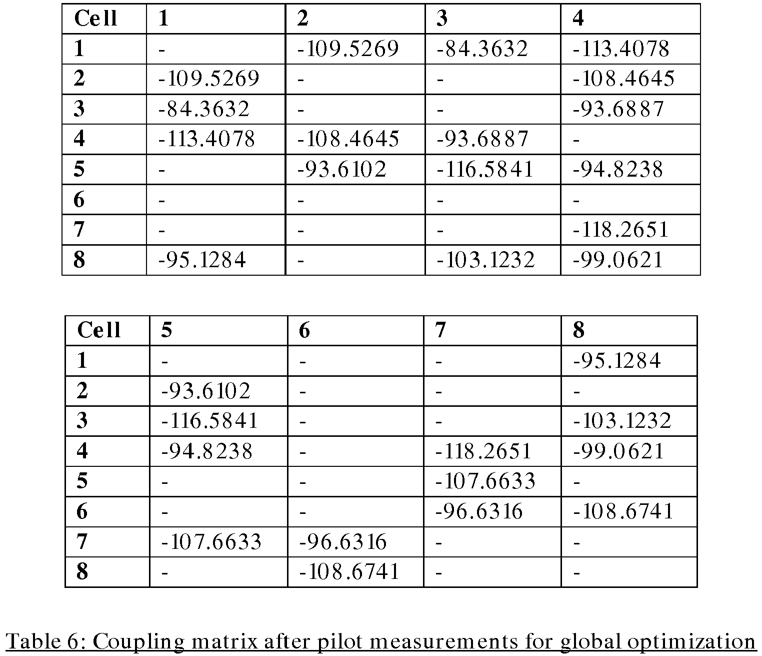

For this example deployment, global optimization to minimise cell ID reuse to minimise collisions/confusion will result in a new assignment of cell IDs as shown in Figure 10 and an update of the NCLs.

Local optimization affected just one node and resulted in 2 confusions as shown in Figure 9, whereas Figure 10 shows the effect of the global assignment, where the assignment was changed for 7 cells.

Knowledge of the coupling between the cells in the entire network helps to improve the cell ID assignment. In this example, the number of confusions was reduced. There is only one such situation in the network and, furthermore, it happens between the cells that are much less coupled than before.

This example relates to a 4G small cell network. However, the same approach can be used to create the coupling matrix and manage cell IDs in 3G and other networks as well.

### Cell ID and NCL Update

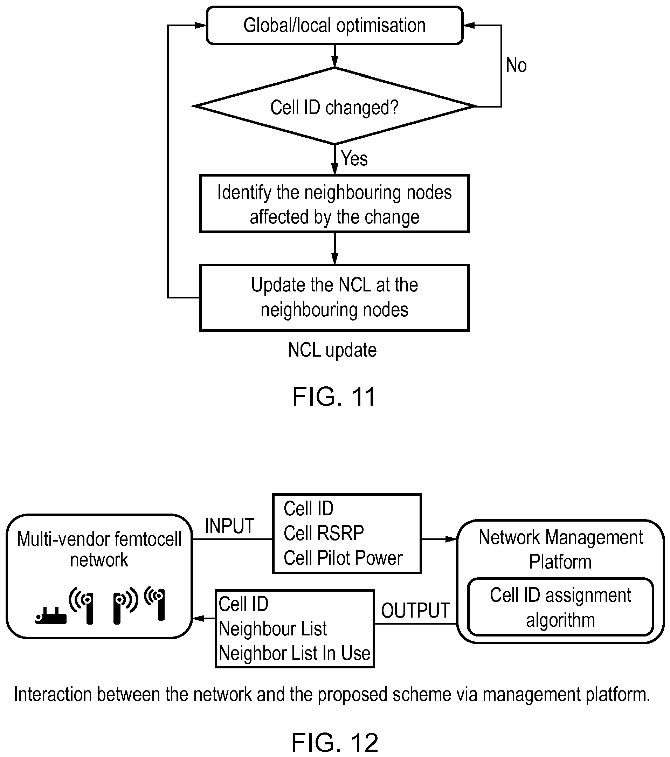

Cell IDs are used as a reference to track the neighbouring cells. Therefore, whenever a change in the cell ID assignment occurs, NCLs need to be updated in all cells affected by the cell ID change, as shown in Figure 11.

Accordingly, it can be seen that in embodiments, a determination of the cell ID allocation can be triggered:
- On-demand: Upon detection of a change in the network configuration or due to poor network performance. The configuration change maybe caused, for example, by a new cell added to the network or by the updates of network parameters, either manual or automatic, like a pilot power update after coverage optimisation. This in turn affects the relationship and visibility between the cells and can therefore result in collisions/confusions. Alternatively or additionally, poor network performance indicated by, for example, frequent handover failures (HOFs) in an area may be caused by the improper configuration of the cell IDs and may therefore trigger the cell ID re-assignment procedure in the underperforming region.
- Periodically: Global optimisation is performed for maintenance purposes at regular intervals, e.g. every 24h, at low-traffic hours. The cell IDs are refreshed to resolve the potential assignment conflicts and updates occur to the affected NCLs.

As mentioned above this approach can be implemented in both 3G and 4G deployments. Table 7 summarizes the required input and output parameters, as standardized in TR-196 Broadband Forum and Figure 12 shows the parameters exchanged between the small cells and the central management system.

**Table 7: Network parameters (TR-196)**

| **3G** | **4G** |
|---|---|
| **INPUT** | |
| FAPService. {i}.REM.UMTS.WCDMA. | FAPService.REM.LTE.Cell.{i}.RF.RSRP |
| Cell{i}.RF. | |
| CPICHRSCP | |
| FAPService.{i}.REM.UMTS.WCDMA. | FAPService.REM.LTE.Cell. {i}. |
| Cell{i}.RF. | RF.PhyCellID |
| PrimaryScramblingCode | |

| **OUTPUT** | |
|---|---|
| F APService. {i} . CellCon fig. UMTS.RA | FAPService.{i}.CellConfig.LTE.RAN.RF. |
| N.RF. | PhyCellID |
| PrimaryScramblingCode | |
| FAPService.{i}.CellConfig.UMTS.RA | FAPService.{i}.CellConfig.LTE.RAN.Neig |
| N.NeighborList.IntraFreqCell.{i}. | hborList.LTECell. {i}. |
| PCPICHScramblingCode | PhyCellID |
| FAPService.{i}.CellConfig.UMTS.RA | FAPService.{i}.CellConfig.LTE.RAN.Neig |
| N.NeighborListIn Use.IntraFreqCell. { | hborListInUse. |
| i}. PCPICHScramblingCode | LTECell. {i}.PhyCellID |
| **OR** | |
| F APService. {i} . CellCon fig. UMTS.RA | |
| N.NeighborListInUse.InterFreqCell.{ | |
| i}. PCPICHScramblingCode | |

This approach enables the configuration and maintenance of the crucial network parameter - the cell ID - in multi-vendor networks. One way to create a coupling matrix of the multi-vendor small cell deployment is based on TR-069. Using this centralised, coordinated method has the following benefits:
- Better reuse of the available Cell IDs, reduction of the collisions and confusions in the network; and
- Improved mobility performance and user experience (fewer handover failures and higher wideband SINR).

This provides an approach to manage the cell IDs in multi-vendor small cell deployments. The generic scheme is applicable to both 3G and 4G networks and is compliant with the TR-069 and TR-196 Broadband Forum specifications.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art wall be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network node method for determining cell identifiers for small cell base stations within a heterogeneous wireless telecommunications network, comprising:
determining an initial cell identifier to be allocated to a small cell base station based on initial neighbour information obtained by said small cell base station; and
determining a cell identifier to be allocated to each of a plurality of small cell base stations which minimises reuse of cell identifiers between each small cell base station to minimise the risk of collisions and/or confusion caused by reuse of cell identifiers by neighbouring cells based on neighbour information obtained by each of said plurality of small cell base stations, wherein said neighbour information comprises an indication of cell identifiers used by neighbouring small cell base stations which are measurable by each of said plurality of small cell base stations when transmitting with an increased transmission power compared to that used when determining said initial cell identifier.

2. The method of claim 1, wherein said determining a cell identifier to be allocated to each of a plurality of small cell base stations occurs at least one of periodically, in response to a reduction of wireless telecommunications network activity and in response to a reduction of wireless telecommunications network performance.

3. The method of claim 1 or 2, wherein said neighbour information comprises an indication of cell identifiers used by neighbouring small cell base stations which are measureable by each of said plurality of small cell base stations when transmitting with a maximum pilot transmission power.

4. The method of any preceding claim, wherein said neighbour information indicates that two small cell base stations are neighbours if either small cell base station is measureable by the other.

5. The method of any preceding claim, wherein when cell identifiers are to be reused, those cell identifiers used by small cell base stations whose measured pilot signals have a lower signal strength are selected in preference to those cell identifiers used by small cell base stations whose measured pilot signals have a higher signal strength.

6. The method of any preceding claim, wherein when said determining a cell identifier which minimises reuse of cell identifiers between each of said plurality of said small cell base stations causes a change in a cell identifier allocated previously to a small cell base station, the method comprises transmitting an indication of said change in said cell identifier allocated previously to said small cell base station.

7. The method of claim 1, wherein said determining an initial cell identifier occurs in response to at least one of addition of said small cell base station to said heterogeneous wireless telecommunications network and a change in communications performance experienced by said small cell base station.

8. The method of any preceding claim, wherein said initial neighbour information comprises an indication of cell identifiers used by neighbouring small cell base stations which are measureable by said small cell base station.

9. The method of any preceding claim, wherein said initial neighbour information comprises an indication of a strength of measureable pilot signals.

10. The method of any preceding claim, wherein when cell identifiers are to be reused, those cell identifiers used by small cell base stations whose measured pilot signals have a lower signal strength are selected in preference to those cell identifiers used by small cell base stations whose measured pilot signals have a higher signal strength.

11. The method of claim 1, wherein said increased transmission power is decreased following said determining said neighbour information.

12. A network node for determining cell identifiers for small cell base stations within a heterogeneous wireless telecommunications network, comprising:
determining logic operable to determine an initial cell identifier to be allocated to a small cell base station based on initial neighbour information obtained by said small cell base station and to determine a cell identifier to be allocated to each of a plurality of small cell base stations which minimises reuse of cell identifiers between each small cell base station to minimise the risk of collisions and/or confusion caused by reuse of cell identifiers by neighbouring cells based on neighbour information obtained by each of said plurality of small cell base stations, wherein said neighbour information comprises an indication of cell identifiers used by neighbouring small cell base stations which are measurable by each of said plurality of small cell base stations when transmitting with an increased transmission power compared to that used when determining said initial cell identifier.

13. A computer program product operable, when executed on a computer, to perform the method of any one of claims 1 to 11.

## Patentansprüche

1. Netzwerkknotenverfahren zum Bestimmen von Zellidentifizierern für Kleinzellen-Basisstationen innerhalb eines heterogenen drahtlosen Telekommunikationsnetzwerks, umfassend:
Bestimmen eines anfänglichen Zellidentifizierers, der einer Kleinzellen-Basisstation zuzuordnen ist, basierend auf anfänglichen Nachbarinformationen, die von der Kleinzellen-Basisstation erhalten werden; und
Bestimmen eines Zellidentifizierers, der jeder aus mehreren Kleinzellen-Basisstationen zuzuordnen ist, der die Wiederverwendung von Zellidentifizierern zwischen jeder Kleinzellen-Basisstation minimiert, um das Risiko von Kollisionen und/oder Verwechslungen zu minimieren, die durch die Wiederverwendung von Zellidentifizierern durch benachbarte Zellen verursacht werden, basierend auf Nachbarinformationen, die von jeder der mehreren Kleinzellen-Basisstationen erhalten werden, wobei die Nachbarinformationen eine Anzeige von Zellidentifizierern umfassen, die von benachbarten Kleinzellen-Basisstationen verwendet werden, die von jeder der mehreren Kleinzellen-Basisstationen beim Übertragen mit einer erhöhten Übertragungsleistung messbar sind, verglichen mit derjenigen, die beim Bestimmen des anfänglichen Zellidentifizierers verwendet wird.

2. Verfahren nach Anspruch 1, wobei das Bestimmen eines Zellidentifizierers, der jeder aus mehreren Kleinzellen-Basisstationen zuzuordnen ist, mindestens einmal periodisch erfolgt, als Reaktion auf eine Verringerung der Aktivität des drahtlosen Telekommunikationsnetzwerks und als Reaktion auf eine Verringerung der Leistung des drahtlosen Telekommunikationsnetzwerks.

3. Verfahren nach Anspruch 1 oder 2, wobei die Nachbarinformationen eine Anzeige von Zellidentifizierern umfassen, die von benachbarten Kleinzellen-Basisstationen verwendet werden, die von jeder der mehreren Kleinzellen-Basisstationen beim Übertragen mit einer maximalen Pilotübertragungsleistung messbar sind.

4. Verfahren nach einem der vorhergehenden Ansprüche, wobei die Nachbarinformationen anzeigen, dass zwei Kleinzellen-Basisstationen Nachbarn sind, wenn eine der Kleinzellen-Basisstationen durch die andere messbar ist.

5. Verfahren nach einem der vorhergehenden Ansprüche, wobei, wenn Zellidentifizierer wiederverwendet werden sollen, diejenigen Zellidentifizierer ausgewählt werden, die von Kleinzellen-Basisstationen verwendet werden, deren gemessene Pilotsignale eine geringere Signalstärke aufweisen, anstatt derjenigen Zellidentifizierer, die von Kleinzellen-Basisstationen verwendet werden, deren gemessene Pilotsignale eine höhere Signalstärke aufweisen.

6. Verfahren nach einem der vorhergehenden Ansprüche, wobei das Bestimmen eines Zellidentifizierers, der die Wiederverwendung von Zellidentifizierern zwischen jeder der mehreren Kleinzellen-Basisstationen minimiert, eine Änderung in einem Zellidentifizierer bewirkt, der zuvor einer Kleinzellen-Basisstation zugeordnet war, wobei das Verfahren das Übertragen einer Anzeige über die Änderung in dem zuvor der Kleinzellen-Basisstation zugeordneten Zellidentifizierer umfasst.

7. Verfahren nach Anspruch 1, wobei das Bestimmen eines anfänglichen Zellidentifizierers als Reaktion auf mindestens ein Hinzufügen der Kleinzellen-Basisstation zu dem heterogenen drahtlosen Telekommunikationsnetzwerk und eine Änderung der Kommunikationsleistung, die von der Kleinzellen-Basisstation erfahren wird, erfolgt.

8. Verfahren nach einem der vorhergehenden Ansprüche, wobei die anfänglichen Nachbarinformationen eine Anzeige von Zellidentifizierern umfassen, die von benachbarten Kleinzellen-Basisstationen verwendet werden und von der Kleinzellen-Basisstation messbar sind.

9. Verfahren nach einem der vorhergehenden Ansprüche, wobei die anfänglichen Nachbarinformationen eine Anzeige der Stärke messbarer Pilotsignale umfassen.

10. Verfahren nach einem der vorhergehenden Ansprüche, wobei, wenn Zellidentifizierer wiederverwendet werden sollen, diejenigen Zellidentifizierer ausgewählt werden, die von Kleinzellen-Basisstationen verwendet werden, deren gemessene Pilotsignale eine geringere Signalstärke aufweisen, anstatt derjenigen Zellidentifizierer, die von Kleinzellen-Basisstationen verwendet werden, deren gemessene Pilotsignale eine höhere Signalstärke aufweisen.

11. Verfahren nach Anspruch 1, wobei die erhöhte Sendeleistung nach dem Bestimmen der Nachbarinformationen verringert wird.

12. Netzwerkknoten zum Bestimmen von Zellidentifizierern für Kleinzellen-Basisstationen innerhalb eines heterogenen drahtlosen Telekommunikationsnetzwerks, umfassend:
Bestimmen einer Logik, die betreibbar ist, um einen anfänglichen Zellidentifizierer zu bestimmen, der einer Kleinzellen-Basisstation zuzuordnen ist, basierend auf anfänglichen Nachbarinformationen, die von der Kleinzellen-Basisstation erhalten wurden, und um einen Zellidentifizierer zu bestimmen, der jeder von mehreren Kleinzellen-Basisstationen zuzuordnen ist, der die Wiederverwendung von Zellidentifizierern zwischen jeder Kleinzellen-Basisstation minimiert, um das Risiko von Kollisionen und/oder Verwechslungen zu minimieren, die durch die Wiederverwendung von Zellidentifizierern durch Nachbarzellen verursacht werden, basierend auf Nachbarinformationen, die von jeder von den mehreren Kleinzellen-Basisstationen erhalten wurden, wobei die Nachbarinformationen eine Anzeige von Zellidentifizierern umfassen, die von benachbarten Kleinzellen-Basisstationen verwendet werden, die von jeder der mehreren Kleinzellen-Basisstationen beim Übertragen mit einer erhöhten Übertragungsleistung messbar sind, verglichen mit derjenigen, die beim Bestimmen des anfänglichen Zellidentifizierers verwendet wird.

13. Computerprogrammprodukt, das beim Ausführen auf einem Computer betreibbar ist, um das Verfahren nach einem der Ansprüche 1 bis 11 durchzuführen.

## Revendications

1. Procédé mis en oeuvre dans un noeud de réseau pour déterminer des identifiants de cellules pour des stations de base à petites cellules dans un réseau de télécommunication sans fil hétérogène, comprenant les étapes suivantes :
détermination d'un identifiant de cellule initiale à allouer à une station de base à petites cellules sur la base des informations de voisinage initiales obtenues par ladite station de base à petites cellules ; et
détermination d'un identifiant de cellule à allouer à chacune d'une pluralité de stations de base à petites cellules, ce qui minimise la réutilisation d'identifiants de cellules entre chaque station de base à petites cellules afin de minimiser le risque de collisions et/ou de confusion provoqué par la réutilisation d'identifiants de cellule par des cellules voisines sur la base des informations de voisinage obtenues par chacune de ladite pluralité de stations de base à petites cellules, dans lequel lesdites informations de voisinage comprennent une indication d'identifiants de cellules utilisés par des stations de base à petites cellules voisines, mesurables par chacune de ladite pluralité de stations de base à petites cellules lors d'une transmission avec une puissance de transmission accrue par rapport à celle utilisée lors de la détermination dudit identifiant de cellule initiale.

2. Procédé selon la revendication 1, dans lequel ladite détermination d'un identifiant de cellule à allouer à chacune d'une pluralité de stations de base à petites cellules se produit au moins périodiquement, en réponse à une réduction de l'activité du réseau de télécommunications sans fil et en réponse à une réduction des performances du réseau de télécommunications sans fil.

3. Procédé selon les revendications 1 ou 2, dans lequel lesdites informations de voisinage comprennent une indication d'identifiants de cellules utilisés par des stations de base à petites cellules voisines, mesurables par chacune de ladite pluralité de stations de base à petites cellules lors d'une transmission avec une puissance de transmission pilote maximale.

4. Procédé selon l'une quelconque des revendications précédentes, dans lequel lesdites informations de voisinage indiquent que deux stations de base à petites cellules sont voisines si l'une ou l'autre des stations de base à petites cellules est mesurable par l'autre.

5. Procédé selon l'une quelconque des revendications précédentes, dans lequel, lorsque les identifiants de cellules doivent être réutilisés, les identifiants de cellules utilisés par les stations de base à petites cellules dont les signaux pilotes mesurés ont une intensité de signal inférieure sont sélectionnés de préférence aux identifiants de cellules utilisés par les stations de base à petites cellules dont les signaux pilotes mesurés ont une intensité de signal plus élevée.

6. Procédé selon l'une quelconque des revendications précédentes, dans lequel, lorsque ladite détermination d'un identifiant de cellule qui minimise la réutilisation d'identifiants de cellules entre chacune de ladite pluralité desdites stations de base à petites cellules, provoque une modification dans un identifiant de cellule alloué précédemment à une station de base à petites cellules, le procédé comprend la transmission d'une indication dudit changement dans ledit identifiant de cellule alloué précédemment à ladite station de base à petites cellules.

7. Procédé selon la revendication 1, dans lequel ladite détermination d'un identifiant de cellule initiale se produit en réponse à au moins l'une des opérations parmi l'ajout de ladite station de base à petites cellules audit réseau de télécommunication sans fil hétérogène et un changement des performances de communication ressenti par ladite station de base à petites cellules.

8. Procédé selon l'une quelconque des revendications précédentes, dans lequel lesdites informations de voisinage initiales comprennent une indication d'identifiants de cellules utilisés par des stations de base à petites cellules voisines, qui peuvent être mesurées par ladite station de base à petites cellules.

9. Procédé selon l'une quelconque des revendications précédentes, dans lequel ladite information de voisinage initiale comprend une indication de la force de signaux pilotes mesurables.

10. Procédé selon l'une quelconque des revendications précédentes, dans lequel, lorsque les identifiants de cellules doivent être réutilisés, les identifiants de cellules utilisés par les stations de base à petites cellules dont les signaux pilotes mesurés ont une intensité de signal inférieure sont sélectionnés de préférence aux identifiants de cellules utilisés par les stations de base à petites cellules dont les signaux pilotes mesurés ont une intensité de signal plus élevée.

11. Procédé selon la revendication 1, dans lequel ladite puissance de transmission accrue est diminuée après ladite détermination de ladite information de voisinage.

12. Noeud de réseau pour déterminer des identifiants de cellules pour des stations de base à petites cellules dans un réseau de télécommunication sans fil hétérogène, comprenant :
la détermination d'une logique utilisable pour déterminer un identifiant de cellule initiale à allouer à une station de base à petites cellules sur la base des informations de voisinage initiales obtenues par ladite station de base à petites cellules et pour déterminer un identifiant de cellule à allouer à chacune d'une pluralité de stations de base à petites cellules, ce qui minimise la réutilisation des identifiants de cellules entre chaque station de base à petites cellules pour minimiser le risque de collision et/ou de confusion provoqué par la réutilisation d'identifiants de cellules par des cellules voisines sur la base d'informations de voisinage obtenues par chacune de ladite pluralité de stations de base à petites cellules, dans lequel lesdites informations de voisinage comprennent une indication d'identifiants de cellules utilisés par des stations de base à petites cellules voisines, mesurables par chacune de ladite pluralité de stations de base à petites cellules lors d'une transmission avec une puissance de transmission accrue par rapport à celle utilisée lors de la détermination dudit identifiant de cellule initiale.

13. Progiciel informatique utilisable, lorsqu'il est exécuté sur un ordinateur, pour mettre en oeuvre le procédé selon l'une quelconque des revendications 1 à 11.
